Europäisches Patentamt

European Patent Office

Office européen des brevets

(19)

(11) Veröffentlichungsnummer: **0 059 968**
**B1**

(12) # EUROPÄISCHE PATENTSCHRIFT

(45) Veröffentlichungstag der Patentschrift:
31.10.84

(51) Int. Cl.³: **F 16 D 25/14**

(21) Anmeldenummer: **82101823.1**

(22) Anmeldetag: **08.03.82**

(54) **Steuerung für eine Flüssigkeitskupplung.**

(30) Priorität: **09.03.81 US 241871**

(43) Veröffentlichungstag der Anmeldung:
**15.09.82 Patentblatt 82/37**

(45) Bekanntmachung des Hinweises auf die Patenterteilung:
**31.10.84 Patentblatt 84/44**

(84) Benannte Vertragsstaaten:
**AT BE CH DE FR GB IT LI NL SE**

(56) Entgegenhaltungen:
**EP - A - 0 036 070**
**DE - A - 2 241 178**
**US - A - 3 468 194**
**US - A - 3 709 065**
**US - A - 3 863 523**
**US - A - 3 882 738**

(73) Patentinhaber: **DEERE & COMPANY, 1 John Deere Road, Moline Illinois 61265 (US)**

(72) Erfinder: **Shirley, Ralph Edwin, 1429 Jersey Lane, Waterloo Iowa 50701 (US)**

(74) Vertreter: **Gramm, Werner, Prof. Dipl.-Ing. et al, Patentanwälte Gramm + Lins Theodor-Heuss-Strasse 2, D-3300 Braunschweig (DE)**

**Beschreibung**

Die Erfindung betrifft eine Steuerung für eine Flüssigkeitskupplung, bestehend aus einer Druckflüssigkeitsquelle, einem Flüssigkeitsreservoir und in den Strömungsmittelumlauf geschalteten Steuerventilen.

Angetriebene Fahrzeuge und Maschinen, die z. B. in der Landwirtschaft oder Industrie eingesetzt werden, weisen eine oder mehr Kupplungen auf, die durch Flüssigkeitsdruck beaufschlagt werden, um ein Drehmoment zwischen einer Kraftquelle und einem Ausgang zu übertragen. Aus Sicherheitsgründen ist ein Steuersystem häufig mit einem elektrischen Schalter versehen, der entweder eine neutrale oder eine Park-Schaltstellung verlangt, bevor das Fahrzeug oder die Maschine gestartet werden kann. Durch diesen Schalter soll ein Starten des Fahrzeuges oder der Maschine so lange verhindert werden, bis die Bedienungsperson eine sichere Position eingenommen hat. Jedoch besteht bei dieser Anordnung die Möglichkeit, den Schalter kurzzuschließen und dadurch die Schutzmaßnahme zu umgehen. Will z. B. ein Fahrer ein noch eingekuppeltes Fahrzeug sofort starten, kann er versucht sein, den neutralen Startschalter zu umgehen, so daß beim Starten der Maschine das Fahrzeug sich entweder nach vorn oder nach hinten bewegt. Durch diese unvorhergesehene Bewegung kann das Fahrzeug Personen verletzen.

Um diese Gefahr auszuräumen, wurden zahlreiche hydraulisch betätigte Steuersysteme entwickelt, die zahlreiche kupplungsbetätigte Ventile umfassen, die aktiviert werden müssen, bevor sich das Fahrzeug in Bewegung setzen kann. So offenbart z. B. das US-Patent 3 863 523 ein Getriebesteuersystem mit Steuerungen sowohl für Geschwindigkeitsübersetzungsvorrichtungen als auch für Richtungsvorrichtungen. Ein Sicherheitsventil soll sicherstellen, daß anfänglich keine Flüssigkeit von einer Flüssigkeitsquelle zu der Geschwindigkeitsübersetzungsvorrichtung strömen kann, wenn sich die Steuerung der Richtungsvorrichtung nicht in ihrer Neutralstellung befindet. Die Schaltung des Sicherheitsventils erfolgt erst dann, wenn sich in der gewählten Geschwindigkeitsübersetzungsvorrichtung ein ausreichend großer Druck aufgebaut hat. Ein derartiges Sicherheitsventil ermöglicht vollen Druckaufbau in der Geschwindigkeitsübersetzungsvorrichtung und erlaubt ferner, durch Schalten der Richtungssteuerung aus der Neutralstellung den gewählten Richtungsantrieb mit vollem Druck zu beaufschlagen.

Das US-Patent 3 468 194 zeigt eine vergleichbar komplizierte Ausführungsform. Hier ist ein Getriebesteuersystem offenbart zur Steuerung von Flüssigkeitsdruck und Flüssigkeitsströmung. Das Steuersystem umfaßt Geschwindigkeitsumschaltventile, um wahlweise Geschwindigkeits- und Richtungsgetriebekupplungen mit Hydraulikflüssigkeit zu beaufschlagen, sowie ein Druckmodulierventil zur Druckregulierung der Hydraulikflüssigkeit. Ferner ist ein Differentialventil vorgesehen, das Flüssigkeitsdruckreguliereinrichtungen aufweist, um das Richtungsauswahlventil mit Flüssigkeit zu beaufschlagen unter einem Differentialdruck, der konstant niedriger liegt im Vergleich zum Hauptdruck. Dieses Differentialventil weist ein Sicherheitsrückstellventil auf, das die Betätigung einer Richtungsgetriebekupplung nach dem Start verhindert, so lange sich die Steuereinrichtungen irrtümlich außerhalb der Neutralstellung befinden.

Die komplizierte Wirkungsweise sowie die hohen Kosten dieser vorbekannten Steuersysteme hat ihre Einführung weitgehend verhindert.

Der Erfindung liegt somit die Aufgabe zugrunde, eine Steuerung der eingangs erläuterten Bauart zu entwicklen, die sich für ein Fahrzeug oder eine Maschine eignet, und die lediglich die Betätigung einer einzigen Kupplung erfordert.

Diese Aufgabe wird gemäß der Erfindung durch folgende Merkmale gelöst:

a) Ein Steuerventil zur Steuerung des Strömungsflusses zwischen Druckflüssigkeitsquelle und Kupplung ist zwischen einer ersten Steuerstellung, in der es die Druckflüssigkeitsquelle mit der Kupplung verbindet, und einer zweiten Steuerstellung verschiebbar, in der es das Reservoir mit der Kupplung verbindet;

b) ein manuelles Betätigungsorgan zur Verschiebung des Steuerventils;

c) ein Absperrventil zur Steuerung des Strömungsflusses zwischen Druckflüssigkeitsquelle und Kupplung wird von einem federelastischen Glied in eine erste Stellung gedrückt, in der es den Strömungsfluß zwischen Druckflüssigkeitquelle und Kupplung unterbricht, und wird infolge der Verschiebung des Steuerventils aus dessen erster Steuerstellung in seine zweite Steuerstellung gegen die Wirkung des federelastischen Gliedes in eine zweite Stellung verschoben, in der es den Strömungsfluß zwischen Druckflüssigkeitsquelle und Kupplung freigibt, und es bleibt in der zweiten Stellung — infolge des Zurückkehrens des Steuerventils in seine erste Steuerstellung — so lange das Strömungsmittel unter Druck gesetzt wird.

Dabei kann das Absperrventil in Strömungsrichtung gesehen dem Steuerventil nach- oder aber vorgeschaltet sein, also den Strömungsfluß zwischen Steuerventil und Kupplung oder aber zwischen Druckflüssigkeitsquelle und Steuerventil steuern.

Die Druckflüssigkeitsquelle ist üblicherweise eine Pumpe, während das genannte manuelle Betätigungsorgan z. B. ein Kupplungspedal sein kann.

Das Absperrventil kann aufgrund eines Ungleichgewichtes des auf das Absperrventil wirkenden Flüssigkeitsdrucks schalten.

Der wesentliche Vorteil der neuen Steuerung liegt in ihrer besonders einfachen Konstruktion. Sie eignen sich zum Einbau in ein Motorfahrzeug oder eine angetriebene Maschine und sorgt dafür, daß die Kupplung erst dann eingreift, wenn der Fahrer bzw. die Bedienungsperson den Steuerhebel betätigt und dann wieder losgelassen hat.

Das Absperrventil kann mechanisch oder hydraulisch beaufschlagt werden.

Weiter Merkmale der Erfindung sind Gegenstand der Unteransprüche und werden zusammen mit weiteren Vorteilen der Erfindung anhand von Ausführungsbeispielen näher erläutert.

In der Zeichnung sind zwei als Beispiele für die Erfindung dienende Ausführungsformen schematisch und zum Teil im Längsschnitt dargestellt. Es zeigt

Fig. 1 eine Steuerung für eine Flüssigkeitskupplung mit einem hydraulisch betätigten Absperrventil, das in Strömungsrichtung gesehen zwischen einem Steuerventil und der Kupplung liegt, wobei die Ventile in ihrer Stellung nach dem Starten der Maschine aber vor dem Treten des Kupplungspedals in Entkupplungsstellung dargestellt sind;

Fig. 2 die Steuerung gemäß Fig. 1 bei laufender Maschine und getrenntem Kupplungspedal;

Fig. 3 die Steuerung gemäß den Fig. 1 und 2 bei laufender Maschine und wieder in Eingriff befindlicher Kupplung, nachdem zuvor das Kupplungspedal in Entkupplungsstellung getreten worden war;

Fig. 4 eine abgewandelte Ausführungsform einer Steuerung in einer Darstellung sowie im Betriebszustand gemäß Fig. 1, wobei das Absperrventil in Strömungsrichtung gesehen dem Steuerventil vorgeschaltet ist und zum Teil mechanisch betätigt wird;

Fig. 5 die Steuerung gemäß Fig. 4 in einem Betriebszustand gemäß Fig. 2 und

Fig. 6 die Steuerung gemäß den Fig. 4 und 5 in einem Betriebszustand gemäß Fig. 3.

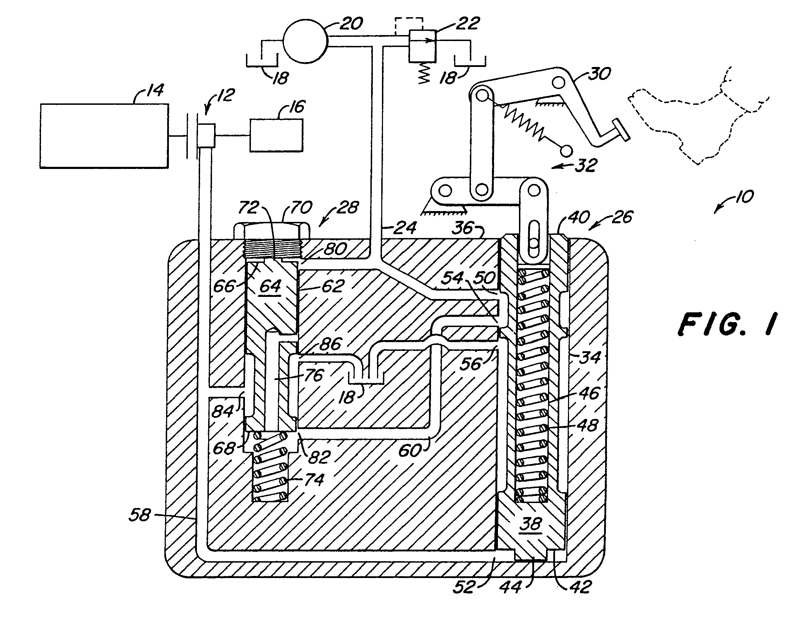

Die Fig. 1 bis 3 zeigen eine Steuerung 10 für eine Flüssigkeitskupplung 12, die von einer Antriebsquelle 14, beispielsweise einem Motor, ein Drehmoment auf einen Ausgang 16, z. B. ein Getriebe, überträgt. Ein Flüssigkeitsreservoir 18 ist an eine Pumpe 20 angeschlossen, die einen bestimmten Flüssigkeitsdruck erzeugen kann. Ein Teil der Druckflüssigkeit wird durch ein Druckablaßventil 22 abgeleitet, das zur Druckregulierung dient, um einen gewünschten Systemdruck aufrechtzuerhalten und eine Zerstörung der Steuerungseinrichtung zu verhindern. Die durch das Druckablaßventil 22 abgeführte Flüssigkeitsmenge fließt wieder in das Flüssigkeitsreservoir 18 zurück, während der übrige Anteil der Druckflüssigkeit von der Pumpe 20 durch eine Strömungsleitung 24 zu einem Steuerventil 26 und einem Absperrventil 28 gedrückt wird. Beide Ventile sind zwischen Pumpe 20 und Kupplung 12 geschaltet und sind untereinander verbunden zur Steuerung des Flüssigkeitsstroms zu oder von der Kupplung 12.

Das Steuerventil 26 wird manuell betätigt durch einen Steuerhebel 30, beispielsweise ein Kupplungspedal, das mit dem Steuerventil 26 über ein mechanisches Gestänge 32 verbunden ist. Die Ausbildung des mechanischen Gestänges 32 kann der jeweiligen Vorrichtung angepaßt werden, für die die Steuerung 10 Verwendung finden soll. Das Steuerventil 26 weist eine an einem Ende offene zylindrische Bohrung 34 in einem Gehäuse 36 auf. In dieser Bohrung 34 ist ein Ventilschieber 38 verschiebbar gelagert, der ein erstes Ende 40 und ein zweites Ende 42 aufweist. Das erste Schieberende 40 liegt etwa in der Öffnung des Gehäuses 36, während das zweite Schieberende 42 mit einem sich nach außen erstreckenden Vorsprung 44 neben dem inneren Ende der Bohrung 34 liegt. Im Schieber 38 ist eine längliche Bohrung 46 vorgesehen, die ebenfalls an ihrem einen, dem ersten Schieberende 40 benachbarten Ende offen ist. Diese innere Bohrung 46 umschließt eine Druckfeder 48, die an dem mechanischen Gestänge 32 angreift und zur Regulierung des die Kupplung 12 beaufschlagenden Flüssigkeitsdrucks dient, wenn der Steuerhebel 30 etwas verschwenkt wird.

Auf der äußeren Mantelfläche des Ventilschiebers 38 sind Stege und dazwischen angeordnete Nuten vorgesehen, durch die Flüssigkeit zu mehreren Anschlüssen geleitet wird, die mit der zylindrischen Bohrung 34 in Verbindung stehen. Es handelt sich um einen ersten Anschluß 50, einen zweiten Anschluß 52, einen Funktionsanschluß 54 und einen Reservoiranschluß 56, wobei der erste Anschluß oder Einlaß 50 im Bereich des ersten Schieberendes 40 liegt und zur Verbindung der Strömungsleitung 24 mit dem Steuerventil 26 dient. Der zweite Anschluß 52 liegt im Bereich des zweiten Schieberendes 42 und dient zur Verbindung der Kupplung 12 mit dem Steuerventil 26 über eine Strömungsleitung 58. Die aus dieser Strömungsleitung 58 kommende Flüssigkeit beaufschlagt das zweite Schieberende 42 des Steuerventils 26 und reguliert zusammen mit der Feder 48 die Bewegung des Ventilschiebers 38 in der Bohrung 34. Dadurch werden abrupte Bewegungsänderungen des Steuerventils 26 vermieden.

Der Funktionsanschluß 54 liegt zwischen dem ersten und zweiten Anschluß 50, 52 und ist über eine Strömungsleitung 60 mit dem Absperrventil 28 verbunden. Der Reservoiranschluß 56 liegt zwischen dem Funktionsanschluß 54 und dem zweiten Anschluß 52 und dient zur Verbindung des Steuerventils 26 mit dem Reservoir 18.

In dem Gehäuse 36 ist auch das Absperrventil 28 untergebracht, das eine Hauptbohrung 62 aufweist, die an einem Ende offen ist, und in der ein Ventilschieber 64 mit einem ersten Schieberende 66 und einem zweiten Schieberende 68 verschiebbar gelagert ist. Das erste Schieberende 66 liegt im Bereich des offenen Endes der Hauptbohrung 62, die von einem Verschlußstopfen 70 verschlossen wird, nachdem der Ventilschieber 64 in die Hauptbohrung 62 eingeschoben worden ist. Das erste Schieberende 66 weist einen nach außen ragenden Vorsprung 72 auf, der eine stumpfe Anlage zwischen Ventilschieber 64 und innerer Oberfläche des Verschlußstopfens 70 verhindert. Das zweite Schieberende 68 liegt im Bereich des geschlossenen Endes der Hauptbohrung 62 und wird von einer dort angeordneten Druckfeder 74 beaufschlagt. Im Ventilschieber 64 ist eine längliche Strömungsverbindung 76 vorgesehen, die am zweiten Schieberende 68 offen ausmündet und mit einer in der Mantelfläche des Ventilschiebers 64 vorgesehenen Öffnung in Verbindung steht. Ebenso wie der Ventilschieber 38 des Steuerventils 26 weist auch der Ventilschieber 64 des Absperrventils 28 auf seiner äußeren Mantelfläche mehrere Stege und Nuten auf, die Strömungsverbindungen mit mehreren Anschlüssen herstellen, die alle in die Hauptbohrung 62 münden. Es handelt sich um einen ersten Anschluß 80, einen zweiten Anschluß 82, einen Funktionsanschluß 84 und einen Reservoiranschluß 86. Der erste Anschluß 80 liegt im Bereich des ersten Schieberendes 66 und verbindet die Strömungsleitung 24 mit dem Absperrventil 28. Der zweite Anschluß 82 liegt im Bereich des zweiten Schieberendes 68 und ist über die Strömungsleitung 60 mit dem Funktionsanschluß 54 des Steuerventils 26 verbunden. Der Funktionsanschluß 84 des Absperrventils 28 liegt zwischen dem ersten und zweiten Anschluß 80, 82 und mündet in die Strömungsleitung 58, die die Kupplung 12 mit dem zweiten Anschluß 52 des Steuerventils 26 strömungsmäßig verbindet. Der Reservoiranschluß 86 liegt zwischen dem ersten Anschluß 80 und dem Funktionsanschluß 84 und dient zur Verbindung entweder des zweiten Schieberendes 68 oder aber des Funktionsanschlusses 84 mit dem Reservoir 18.

Die Flüssigkeitsströmung erfolgt bei dem Ausführungsbeispiel gemäß den Fig. 1 bis 3 wie folgt:

Bei gestarteter Maschine 14 aber bevor noch der Steuerhebel 30 erstmalig verschwenkt oder durchgedrückt worden ist, wird unter Druck stehende Flüssigkeit von der Pumpe 20 durch die Strömungsleitung 24 gleichzeitig zum ersten Anschluß 50 des Steuerventils 26 und zum ersten Anschluß 80 des Absperrventils 28 gedrückt. Die durch den ersten Anschluß 50 des Steuerventils 26 eintretende Druckflüssigkeit wird durch den Funktionsanschluß 54 nach außen und durch die Strömungsleitung 60 zum zweiten Anschluß 82 des Absperrventils 28 geleitet. Das erste Schieberende 66 und das zweite Schieberende 68 des Absperrventils 28 bilden in Kombination mit den Wandungen der Hauptbohrung 62 eine erste und eine zweite Servokammer. Wenn diese beiden Kammern unter Druck stehen, stehen die auf den Ventilschieber 25 wirkenden Druckkräfte im Gleichgewicht. Dieser Neutralisierungseffekt erlaubt es der Druckfeder 74, das Absperrventil 28 in seine erste Stellung zu drücken, in der der Vorsprung 72 am ersten Schieberende 66 gegen die Innenfläche des Verschlußstopfens 70 anliegt. In dieser Stellung unterbricht der Ventilschieber 64 den Strömungsfluß zwischen dem zweiten Anschluß 82 und dem Funktionsanschluß 84. Dadurch kann keine Druckflüssigkeit zur Kupplung 12 gelangen, die deshalb nicht in Eingriff gelangt. Ohne Eingriff der Kupplung 12 kann keine Kraft von der Maschine 14 auf das Getriebe 16 übertragen werden, so daß das Fahrzeug oder aber die Maschine nicht anfährt bzw. arbeitet.

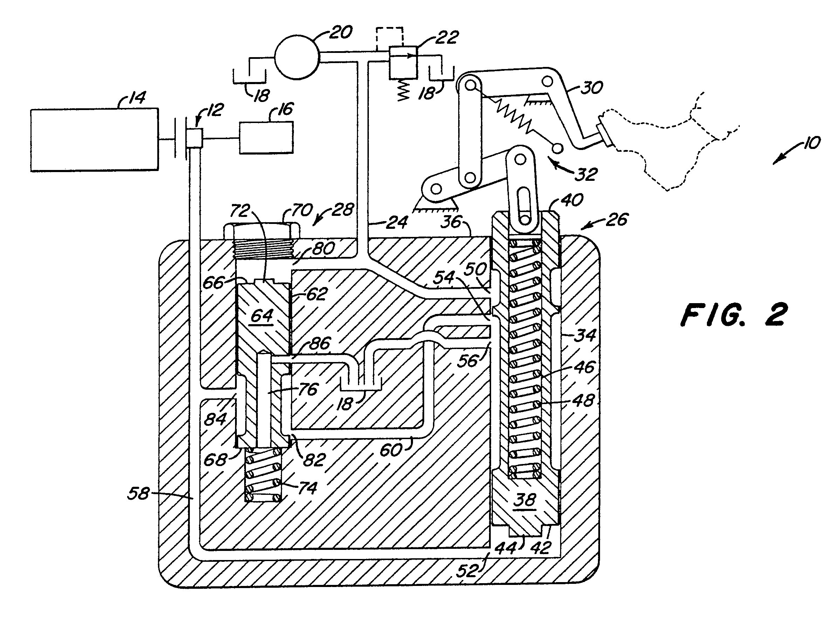

Wird nun das Fußpedal 30 gemäß Fig. 2 durchgetreten, zieht das mechanische Gestänge 32 den Ventilschieber 38 innerhalb der zylindrischen Bohrung 34 nach oben. Dadurch wird der Strömungsfluß durch den ersten Anschluß 50 unterbrochen. Gleichzeitig wird der Funktionsanschluß 54 an den Reservoiranschluß 56 angeschlossen, so daß die sich in der zweiten Servokammer des Absperrventils 28 befindliche Druckflüssigkeit in das Reservoir 18 ablaufen kann. Dieser Druckablaß in der zweiten Servokammer führt dazu, daß die sich in der ersten Servokammer befindliche Druckflüssigkeit die durch die Feder 74 ausgeübte Kraft überwinden kann und den Ventilschieber 64 des Absperrventils nach unten verschiebt. Durch diese Verschiebung entsteht eine Strömungsverbindung zwischen dem Funktionsanschluß 84 und dem zweiten Anschluß 82, so daß die sich ggf. in der Kupplung 12 oder der Strömungsleitung 58 befindliche Druckflüssigkeit über die Strömungsleitung 60, das Steuerventil 26 und den Reservoiranschluß 56 in das Reservoir 18 abgelassen werden kann. Ferner ist festzustellen, daß bei der Abwärtsbewegung des Absperr-Ventilschiebers 54 in seine zweite Stellung etwaig in der zweiten Servokammer befindliche Druckflüssigkeit durch die Strömungsverbindung 76 in das Reservoir 18 abfließen kann.

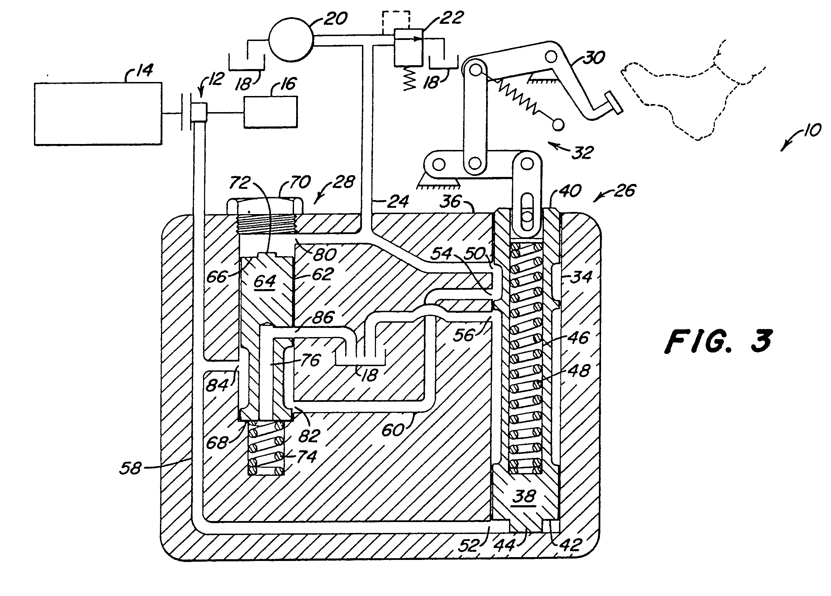

Wird nun — wie es Fig. 3 zeigt — das Kupplungspedal 30 wieder losgelassen bzw. in seine Ausgangsstellung zurückverschwenkt, verschiebt sich der Ventilschieber 38 des Steuerventils 26 nach unten und öffnet erneut die Strömungsverbindung zwischen dem ersten Anschluß 50 und dem Funktionsanschluß 54, so daß Druckflüssigkeit von der Pumpe 20 zum zweiten Anschluß 82 des Absperrventils 28 gelangen kann. Da Druckflüssigkeit von der Pumpe 20 gleichzeitig auch gegen das erste Schieberende 66 des Absperrventils gedrückt wird, verharrt das Absperrventil in seiner zweiten Stellung, in der die Feder 74 zusammengedrückt ist und eine Strömungsverbindung zwischen dem zweiten Anschluß 82 und dem Funktionsanschluß 84 besteht. Dadurch kann Druckflüssigkeit durch das Absperrventil 28 hindurch unmittelbar zur Kupplung 12 strömen und diese in Eingriff bringen. Dadurch erfolgt eine Kraftübertragung von der Maschine 14 auf das Getriebe 16.

Es ist festzustellen, daß ein weiteres Durchdrücken des Steuerhebels 30 bzw. des Kupplungspedals ohne Einfluß auf das Absperrventil 28 bleibt, so lange wie die Maschine 14 läuft. Wird die Maschine 14 abgestellt, fällt der Antrieb für die Pumpe 20 aus, so daß keine Druckflüssigkeit durch das Steuersystem 10 strömen kann. Der dadurch bedingte Druckabfall am ersten Schieberende 66 des Absperrventils 28 ermöglicht es der Druckfeder 74, den Ventilschieber 64 zurück in seine erste Stellung zu verschieben, in der der Strömungsfluß zwischen dem zweiten Anschluß 82 und dem Funktionanschluß 84 erneut unterbrochen ist. Die Steuerung 10 kehrt daher in ihre in Fig. 1 dargestellte Ausgangsposition zurück.

Das dargestellte Steuersystem 10 ist insbesondere dafür geeignet, das Abfahren eines Fahrzeugs so lange zu verhindern, bis sich der Fahrer auf seinem Sitz befindet und die Steuerung des Fahrzeugs übernommen hat. Dies wird dadurch erreicht, daß ein Eingriff der Kupplung 12 so lange verhindert wird, bis der Fahrer das Kupplungspedal 30 durchdrückt und dann wieder losläßt.

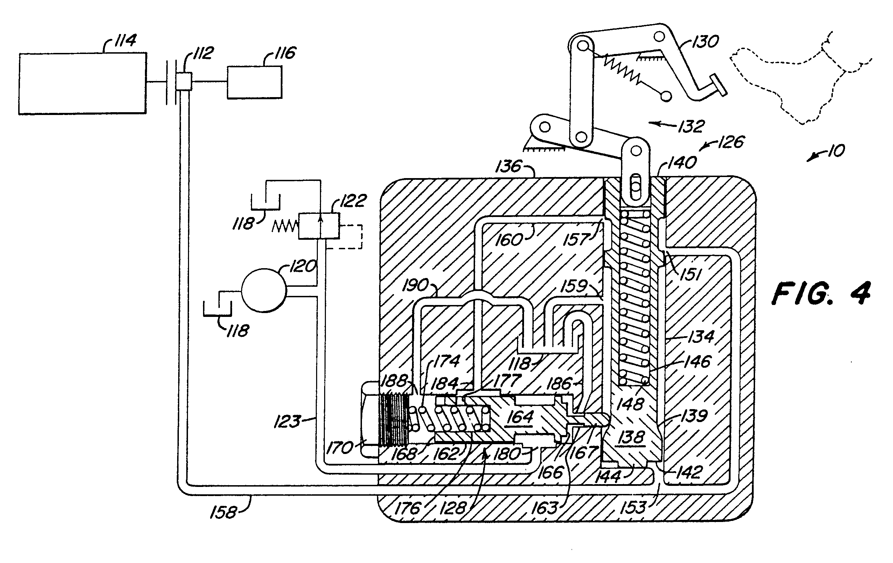

Die Fig. 4 bis 6 zeigen eine abgewandelte Ausführungsform. Soweit die einzelnen Teile mit denen der Fig. 1 bis 3 übereinstimmen, wurde den Bezugszeichen lediglich eine »1« vorangestellt.

Bei dieser Alternativlösung ist wiederum eine flüssigkeitsbetätigte Kupplung 112 zwischen einer Antriebsmaschine 114 und einem Getriebe 116 vorgesehen. Das Steuersystem 10 umfaßt ein Flüssigkeitsreservoir 118, eine Pumpe 120 und ein Druckablaßventil 122 sowie ein in einem Gehäuse 136 angeordnetes Steuerventil 126 und ein Absperrventil 128. Das Steuerventil 126 umfaßt eine Hauptbohrung 134, die am oberen Ende offen ist. In diese Hauptbohrung 134 ist ein Ventilschieber 138 mit einem ersten Schieberende 140 und einem zweiten Schieberende 142 verschiebbar gelagert. Das erste Schieberende 140 liegt etwa in der Öffnung des Gehäuses 136, während das zweite Schieberende 142 mit einem sich nach außen erstreckenden Vorsprung 144 neben dem inneren Ende der Hauptbohrung 134 liegt. Der Vorsprung 144 ermöglicht eine Beaufschlagung des zweiten Schieberendes 142 durch Druckflüssigkeit, wenn der Ventilschieber 138 gegen das innere Ende der Hauptbohrung 134 anliegt. Vorhanden sind ferner eine innere Bohrung 146, eine Druckfeder 148, ein mechanisches Gestänge 132 und ein Steuerhebel 130, die im Aufbau und in ihrer Funktion den Bauteilen der Fig. 1 bis 3 entsprechen. In der äußeren Mantelfläche des Ventilschiebers 138 sind wiederum Stege mit dazwischen gebildeten Nuten und zusätzlich ein bogenförmiger Oberflächenabschnitt 139 vorgesehen. Letzterer liegt neben dem zweiten Schieberende 142 und wirkt mit dem Absperrventil 128 in einer später näher erläuterten Weise zusammen.

In die Hauptbohrung 134 münden mehrere Anschlüsse, nämlich ein erster Anschluß 151, ein zweiter Anschluß 153, ein Funktionsanschluß 157 und ein Reservoiranschluß 159. Der erste Anschluß 151 liegt im Bereich des ersten Schieberendes 140 und steht mit der Kupplung 112 über eine Strömungsleitung 158 in Verbindung. Der zweite Anschluß 153 liegt neben dem zweiten Schieberende 142 des Steuerventils 126 und steht ebenfalls mit der Strömungsleitung 158 in Verbindung. Der Funktionsanschluß 157 liegt im Bereich des ersten Schieberendes 140 und ist über eine Strömungsleitung 160 an das Absperrventil 128 angeschlossen. Der Reservoiranschluß 159 liegt zwischen dem ersten und zweiten Anschluß 151, 153 und dient zur Verbindung der Hauptbohrung 134 mit dem Reservoir 118.

Im Gehäuse 136 ist außerdem das Absperrventil 128 untergebracht, das eine Hauptbohrung 162 aufweist, die mit der Hauptbohrung 134 des Steuerventils 126 über eine konzentrische Bohrung 163 in Verbindung steht. In der Hauptbohrung 162 ist ein Ventilschieber 164 mit einem ersten Schieberende 166 und einem zweiten Schieberende 168 verschiebbar gelagert. Am ersten Schieberende 166 sitzt ein Stößel 167, der sich durch die konzentrische Bohrung 163 erstreckt und gegen den bogenförmigen Oberflächenabschnitt 139 des Steuerventils 126 anliegt, wenn sich das Absperrventil 128 in seiner ersten Stellung befindet. Das zweite Schieberende 168 des Absperrventils 128 erstreckt sich in Richtung auf eine im Gehäuse 136 vorgesehene Öffnung, die von einem Verschlußstopfen 170 verschlossen wird, nachdem der Ventilschieber 164 in die Hauptbohrung 162 eingeschoben worden ist.

Das zweite Schieberende 168 wird von dem Verschlußstopfen 170 durch eine Feder 174 weggedrückt, wenn sich das Absperrventil 128 in seiner ersten Stellung (Fig. 4) befindet.

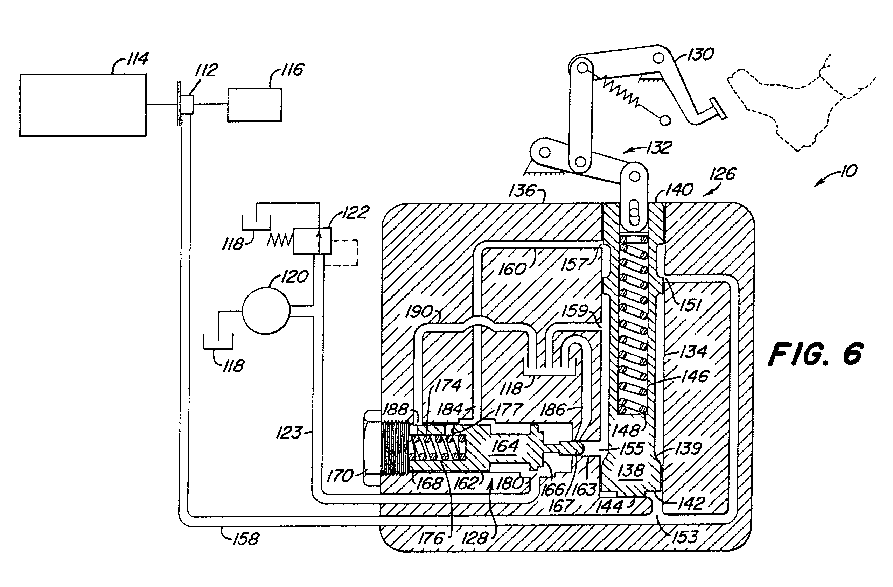

Im Ventilschieber 164 ist eine Strömungsverbindung 176 vorgesehen, die im zweiten Schieberende 168 mündet und über einen Durchlaß 177 mit einem Anschluß im äußeren Mantel des Ventilschiebers 164 in Verbindung steht. Ebenso wie beim Absperrventil 28 in den Fig. 1 bis 3 weist auch der Ventilschieber 164 mehrere Stege und dazwischen gebildete Nuten zur Steuerung der Flüssigkeit zu einer Vielzahl von Anschlüssen auf, die in die Hauptbohrung 162 münden. Vorgesehen sind ein erster Anschluß 180, ein Funktionsanschluß 184, ein erster und zweiter Reservoiranschluß 186 und 188. Der erste Anschluß 180 liegt im Bereich des ersten Schieberendes 166 und ist über eine Strömungsleitung 123 mit der Pumpe 120 verbunden. Der Funktionsanschluß 184 liegt zwischen dem ersten Anschluß 180 und dem zweiten Schieberende 168 und ist über die Strömungsleitung 160 mit dem Funktionsanschluß 157 des Steuerventils 126 verbunden. Der erste Reservoiranschluß 186 mündet in die konzentrische Bohrung 163 und ist normalerweise offen gegenüber dem Reservoir 118. Der zweite Reservoiranschluß 188 verbindet ständig das zweite Schieberende 168 des Absperrventils 128 mit dem Reservoir 118 über eine Strömungsleitung 190. Dieser zweite Reservoiranschluß 188 ermöglicht ein Abfließen von in der Strömungsverbindung 176 eingeschlossener Druckflüssigkeit in das Reservoir 118, so daß das zweite Schieberende 168 des Absperrventilschiebers 164 gegen die Innenfläche des Verschlußstopfens 170 anschlagen kann (siehe Fig. 6).

Die Kammer zwischen dem Stößel 167 und dem ersten Schieberende 166 des Absperrventils 128 wird nachfolgend als erste Servoeinrichtung bezeichnet, während die Kammer zwischen dem zweiten Schieberende 168 und der Innenfläche des Verschlußstopfens 170 nachfolgend als zweite Servoeinrichtung bezeichnet wird.

Das Steuersystem gemäß den Fig. 4 bis 6 arbeitet wie folgt:

Fig. 4 zeigt wiederum die Ausgangsstellung, bei der die Maschine 114 läuft, der Steuerhebel 130 aber noch nicht betätigt worden ist. Bei dieser Stellung fließt Druckflüssigkeit von der Pumpe 120 durch die Strömungsleitung 123 zum ersten Anschluß 180 des Absperrventils 128. Da sich das Steuerventil 126 in seiner unteren ersten Stellung befindet, in der der Vorsprung 144 gegen das innere Ende der Hauptbohrung 134 anliegt, befindet sich auch der Absperr-Ventilschieber 164 in seiner in Fig. 4 dargestellten ersten Stellung. In dieser Position ist der Strömungsfluß zwischen dem ersten Anschluß 180 und dem Funktionsanschluß 184 unterbrochen; der Stößel 167 liegt gegen den oberen Teil des bogenförmigen Oberflächenabschnitts 139 des Steuerventils 126 an. Dieser bogenförmige Abschnitt 139 verbreitert sich nach unten auf einen größeren Durchmesser. Bei der unteren Stellung des Ventilschiebers 138 besteht eine Strömungsverbindung zwischen dem ersten Anschluß 151 und dem Funktionsanschluß 157. Dadurch kann Druckflüssigkeit von der Kupplung 112 oder der Strömungsleitung 158 über die Strömungsleitung 160, die Strömungsverbindung 177, 176 und 190 in das Reservoir 118 abfließen.

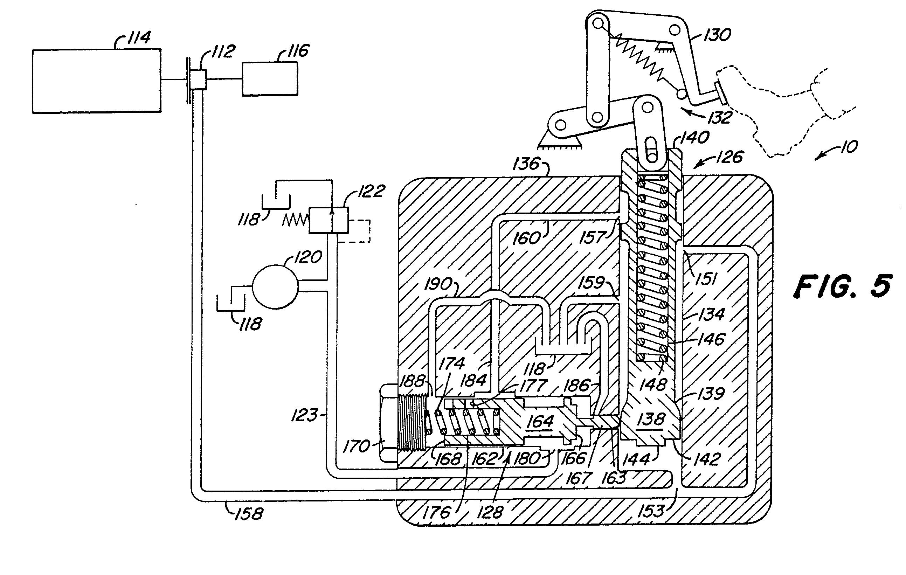

Wird der Steuerhebel 130 gemäß Fig. 5 betätigt, zieht das mechanische Gestänge 132 den Ventilschieber 138 nach oben. Hierdurch wird die Strömungsverbindung zwischen dem ersten Anschluß 151 und dem Funktionsanschluß 157 unterbrochen. Gleichzeitig wird eine Strömungsverbindung zwischen dem ersten Anschluß 151 und dem Reservoiranschluß 159 geöffnet. Ebenfalls gleichzeitig wird der Stößel 167 durch den bogenförmigen Abschnitt 139 des Steuerventils 126 nach links verschoben, so daß der Absperr-Ventilschieber 164 den ersten Reservoiranschluß 186 schließt und die erste Servoeinrichtung mit dem ersten Anschluß 180 verbindet. Dadurch kann Druckflüssigkeit von der Pumpe 120 über die Strömungsleitung 123 das erste Schieberende 166 beaufschlagen und dadurch den Absperr-Ventilschieber 164 unter Zusammendrückung der Feder 174 noch weiter nach links verschieben. Hierdurch wird eine Strömungsverbindung zwischen dem ersten Anschluß 180 und dem Funktionsanschluß 184 geöffnet, wie es die Stellung des Absperr-Ventilschiebers 164 in Fig. 6 erkennen läßt. Obwohl die Druckflüssigkeit nunmehr durch das Absperrventil 128 und die Strömungsleitung 160 strömen kann, ist der weitere Strömungsweg zur Kupplung 112 durch das Steuerventil 126 unterbrochen.

Fig. 6 zeigt den Zustand, nachdem der Steuerhebel 130 wieder losgelassen worden ist bzw. in seine Ausgangsstellung zurückverschwenkt wird. Der Ventilschieber 138 des Steuerventils 126 wird nach unten verschoben und öffnet erneut eine Strömungsverbindung zwischen dem ersten Anschluß 151 und dem Funktionsanschluß 157. Durch die Rückkehr des Ventilschiebers 138 in seine Ausgangsstellung kann Druckflüssigkeit von der Pumpe 120 durch das Absperrventil 128 und das Steuerventil 126 über die Leitungen 160 und 158 zu der Kupplung 112 strömen, die daraufhin in Eingriff gebracht wird und so die Kraft von der Maschine 114 auf das Getriebe 116 überträgt.

Es ist festzustellen, daß ein weiteres Durchdrücken des Steuerhebels 130 ohne Einfluß auf das Absperrventil 128 bleibt solange wie die Maschine 114 läuft. Wird die Maschine 114 abgestellt, bleibt auch die Pumpe 120 stehen, so daß keine Druckflüssigkeit mehr durch das Steuersystem 10 gedrückt werden kann. Die Feder 174 drückt dann den Absperr-Ventilschieber 154 zurück in seine erste Stellung, so daß das Steuersystem 10 wieder die in Fig. 4 dargestellte Ausgangsposition einnimmt.

## Patentansprüche

1. Steuerung für eine Flüssigkeitskupplung (12; 112), bestehend aus einer Druckflüssigkeitsquelle (20; 120), einem Flüssigkeitsreservoir (18; 118) und in den Strömungsmittelumlauf geschalteten Steuerventilen (26, 28; 126, 128), gekennzeichnet durch folgende Merkmale:

a)    ein Steuerventil (26; 126) zur Steuerung des Strömungsflusses zwischen Druckflüssigkeitsquelle (20; 120) und Kupplung (12; 112) ist zwischen einer ersten Steuerstellung, in der es die Druckflüssigkeitsquelle mit der Kupplung verbindet, und einer zweiten Steuerstellung verschiebbar, in der es das Reservoir (18; 118) mit der Kupplung verbindet;

b)    ein manuelles Betätigungsorgan (30, 32; 130, 132) zur Verschiebung des Steuerventils (26; 126);

c)    ein Absperrventil (28; 128) zur Steuerung des Strömungsflusses zwischen Druckflüssigkeitsquelle (20; 120) und Kupplung (12; 112) wird von einem federelastischen Glied (74; 174) in eine erste Stellung gedrückt, in der es den Strömungsfluß zwischen Druckflüssigkeitsquelle und Kupplung unterbricht, und wird — infolge der Verschiebung des Steuerventils (26; 126) aus dessen erster Steuerstellung in seine zweite Steuerstellung — gegen die Wirkung des federelastischen Gliedes in eine zweite Stellung verschoben, in der es den Strömungsfluß zwischen Druckflüssigkeitsquelle und Kupplung freigibt, und es bleibt in der zweiten Stellung — infolge des Zurückkehrens des Steuerventils in seine erste Steuerstellung — so lange das Strömungsmittel unter Druck gesetzt wird.

2. Steuerung nach Anspruch 1, dadurch gekennzeichnet, daß das Absperrventil (28) in Strömungsrichtung gesehen dem Steuerventil (26) nachgeschaltet ist, also den Strömungsfluß zwischen Steuerventil und Kupplung (12) steuert.

3. Steuerung nach Anspruch 1 und 2, gekennzeichnet durch folgende Merkmale:

a) eine erste Servoeinrichtung (62, 66) drückt unter Einwirkung des von der Druckflüssigkeitsquelle (20) kommenden Flüssigkeitsdrucks das Absperrventil (28) in Richtung auf seine zweite Stellung;

b) eine zweite Servoeinrichtung (62, 68) drückt unter Einwirkung des durch das Steuerventil (26) geleiteten Flüssigkeitsdrucks das Absperrventil (28) in Richtung auf seine erste Stellung und hält es in dieser Stellung.

4. Steuerung nach Anspruch 3, gekennzeichnet durch folgende Merkmale:

a) Das Steuerventil (26) weist einen Einlaß (50), einen Funktionsanschluß (54) und einen Reservoiranschluß (56) auf, die alle mit einer Hauptbohrung (34) in Verbindung stehen, in der ein zwischen den beiden Steuerstellungen verschiebbares Ventilelement (38) gelagert ist, wobei in der ersten Steuerstellung der Einlaß (50) mit dem Funktionsanschluß (54) und in der zweiten Steuerstellung der Funktionsanschluß (54) mit dem Reservoiranschluß (56) verbunden sind;

b) Strömungsleitungen verbinden die Druckflüssigkeitsquelle (20) mit dem Einlaß (50), das Reservoir (18) mit dem Reservoiranschluß (56) und den Funktionsanschluß (54) mit der Kupplung (12);

c) das Absperrventil (28) ist in die Strömungsleitung (60) zwischen Funktionsanschluß (54) und Kupplung (12) geschaltet;

d) eine Strömungsleitung (24, 80) verbindet die Druckflüssigkeitsquelle (20) mit der ersten Servoeinrichtung (62, 66);

e) eine Strömungsleitung (76, 86) verbindet die zweite Servoeinrichtung (62, 68) mit dem Reservoir (18), wenn sich das Absperrventil (28) in seiner zweiten Stellung befindet.

5. Steuerung nach Anspruch 4, gekennzeichnet durch folgende Merkmale des Absperrventils (28):

a) Ein Ventilgehäuse (36) weist eine Hauptbohrung (62) mit einem ersten Ende (6) und einem zweiten Ende (68) sowie einen ersten Anschluß (80), einen zweiten Anschluß (82), einen Funktionsanschluß (84) und einen Reservoiranschluß (86) auf, die alle mit der Hauptbohrung (83ß2) in Verbindung stehen, wobei der erste Anschluß (80) mit der Druckflüssigkeitsquelle (20), der zweite Anschluß (82) über die Strömungsleitung (60) mit dem Funktionsanschluß (54) des Steuerventils (26), der Reservoiranschluß (86) mit dem Reservoir (18) und der Funktionsanschluß (84) über die Strömungsleitung (58) mit der Kupplung (12) verbunden sind;

b) ein Ventilschieber (64) ist in der Hauptbohrung (62) verschiebbar gelagert, wobei in seiner ersten Stellung der erste Anschluß (80) des Absperrventils (28) über das Steuerventil (26) mit dem zweiten Bohrungsende (68) des Absperrventils (28) verbunden und der Strömungsfluß durch diese Hauptbohrung (62) zwischen dem zweiten Anschluß (82) und dem Funktionsanschluß (84) des Absperrventils (28) unterbrochen sind, während in der zweiten Stellung des Ventilschiebers (64) das Steuerventil (26) den ersten Anschluß (80) des Absperrventils (28) von dem zweiten Bohrungsende (68) trennt, jedoch zwischen dem zweiten Anschluß (82) und dem Funktionsanschluß (84) des Absperrventils (28) über die Hauptbohrung (62) des Absperrventils (28) eine Strömungsverbindung besteht;

c) das federelastische Glied (74), z. B. eine Feder, stützt sich zwischen dem zweiten Bohrungsende (68) und dem Ventilschieber (64) ab.

6. Steuerung nach Anspruch 5, dadurch gekennzeichnet, daß im Ventilschieber (64) des Absperrventils (28) eine Strömungsleitung (76) vorgesehen ist, die in das zweite Bohrungsende (68) der Hauptbohrung (62) mündet und dieses in der zweiten Stellung des Ventilschiebers (64) mit dem entfernt von ihm liegenden Reservoiranschluß (86) des Absperrventils (28) verbindet.

7. Steuerung nach Anspruch 1, dadurch gekennzeichnet, daß das Absperrventil (128) in Strömungsrichtung gesehen dem Steuerventil (126) vorgeschaltet ist, also den Strömungsfluß zwischen Druckflüssigkeitsquelle (120) und Steuerventil steuert.

8. Steuerung nach Anspruch 7, dadurch gekennzeichnet, daß das Absperrventil (128) einen Stößel (167) o. dergl. aufweist, der an einem Abschnitt (139) der Außenfläche des Steuerventils (126) so anliegt, daß dessen Verschiebung von der ersten in die zweite Steuerstellung eine Verschiebung des Absperrventils (128) aus seiner ersten Stellung in Richtung auf seine zweite Stellung bewirkt.

9. Steuerung nach Anspruch 8, gekennzeichnet, durch folgende Merkmale:

a) Das Steuerventil (126) weist einen ersten Anschluß (151), einen Funktionsanschluß (157) und einen Reservoiranschluß (159) auf, die alle mit einer Hauptbohrung (134) in Verbindung stehen, in der ein zwischen den beiden Steuerstellungen verschiebbares Ventilelement (138) gelagert ist, wobei in der ersten Stellung der erste Anschluß (151) mit dem Funktionsanschluß (157) und in der zweiten Steuerstellung der erste Anschluß (151) mit dem Reservoiranschluß (159) verbunden sind;

b) eine erste Servoeinrichtung (166, 167) dient zur Unterstützung des Stößels (167) und drückt unter Einwirkung des Flüssigkeitsdruckes das Absperrventil (128) in seine zweite Stellung.

10. Steuerung nach Anspruch 9, gekennzeichnet durch folgende Merkmale des Absperrventils (128):

a) Ein Ventilgehäuse (136) weist eine Hauptbohrung (162) mit einem ersten Ende (166) und einem zweiten Ende (168) sowie einen ersten Anschluß (180), einen Funktionsanschluß (184), einen ersten und zweiten Reservoiranschluß (186, 188) sowie eine konzentrische Bohrung (163) auf, wobei letztere das erste Bohrungsende (166) mit der Hauptbohrung (134) des Steuerventils (126), der erste Reservoiranschluß (186) des Absperrventils (128) die konzentrische Bohrung (163) mit dem Reservoir (118) und der zweite Reservoiranschluß (188) das zweite Bohrungsende (168) mit dem Reservoir (118) verbindet, während der erste Anschluß (180) mit der Druckflüssigkeitsquelle (120) und der Funktionsanschluß (184) des Absperrventils (128) mit dem Funktionsanschluß (157) des Steuerventils (126) verbunden sind;
b) ein Ventilschieber (164) ist in der Hauptbohrung (162) verschiebbar gelagert, wobei in seiner ersten Stellung der Strömungsfluß zwischen erstem Anschluß (180) und Funktionsanschluß (184) unterbrochen ist, während in seiner zweiten Stellung eine Strömungsverbindung zwischen erstem Anschluß (180) und Funktionsanschluß (184) besteht;
c) das federelastische Glied (174), z. B. eine Feder, stützt sich zwischen dem zweiten Bohrungsende (168) und dem Ventilschieber (164) ab.

**Claims**

1. A control system for a fluid activated clutch (12; 112) comprising a source of pressurized fluid (20; 120), a fluid reservoir (18; 118) and control valve means (26, 28; 126, 128) interposed in the fluid flow circuit, characterized by the following features:

a) control valve means (26; 126) for controlling the fluid flow between source of pressurized fluid (20; 120) and clutch (12; 112), said control valve means movable between a first control position which connects said source to said clutch and a second control position which connects said reservoir (18; 118) to said clutch;
b) manual actuator means (30, 32; 130, 132) for movement of said control valve means (26; 126);

c) shut-off valve means (28; 128) for controlling fluid flow between source (20; 120) and clutch (12; 112), said shut-off valve means being biased by biasing means (74; 174) towards a first position blocking fluid flow from said source to said clutch and — being responsive to movement of said control valve means (26; 126) from said first control position to said second control position — is moved against said biasing means to a second position which permits fluid flow from said source to said clutch and remains — being responsive to the moving back of said control valve means in its first control position — in said second position as long as the fluid is pressurized.

2. The control system of claim 1, wherein said shut-off valve means (28) is located downstream of said control valve means (26) for controlling fluid flow between control valve means and clutch (12).
3. The control system of claim 1 and 2, characterized by the following features:

a) first servo means (62, 66) responsive to fluid pressure from said source (20) for urging said shut-off valve means (28) towards its second position;
b) second servo means (62, 68) responsive to fluid pressure passing through said control valve means (26) for urging and maintaining said shut-off valve means (28) towards and in its first position.

4. The control system of claim 3, characterized by the following features:

a) said control valve means (26) including an inlet port (50), a function port (54) and a reservoir port (56) all communicating with a main bore (34) which retains a valving element (38) movable between said first and second control positions, whereby in said first control position said inlet port (50) is connected to said function port (54) and in said second control position said function port (54) is connected to said reservoir port (56);
b) passage means for fluidly connecting said source of pressurized fluid (20) to said inlet port (50), said reservoir (18) to said reservoir port (56) and said function port (54) to said clutch (12);
c) said shut-off valve means (28) interposed in said passage means (60) between said function port (54) and said clutch (12);
d) passage means (24, 80) for fluidly connecting said source of pressurized fluid (20) to said first servo means (62, 66);
e) passage means (76, 86) for fluidly connecting said second servo means (62, 68) to said reservoir (18) when said shut-off valve means (28) is in its second position.

5. The control system of claim 4, wherein said shut-off valve means (28) comprises:

a) a valve body (36) having a main bore (62) with a first end (66) and a second end (68), a first port (80), a second port (82), a function port (84) and a reservoir port (86) all communicating with said main bore (62), said first port (80) connected to said source (20), said second port (82) connected by said passage means (60) to said function port (54) of said control valve means (26), said reservoir port (86) connected to said reservoir (18) and said function port (84) connected by said passage means (58) to said clutch (12);

b) a valve spool (64) mounted in said main bore (62) movable between first and second positions, wherein in said first position said first port (80) of said shut-off valve means (28) is fluidly connected through said control valve means (26) to said second end (68) of said main bore (62) of said shut-off valve means (28) and wherein fluid flow is blocked through said main bore (62) between said second port (82) and said function port (84) of said shut-off valve means (28), and in said second position of said valve spool (64) said first port (80) of said shut-off valve means (28) is fluidly blocked by said control valve means (26) from said second end (68) of said main bore but fluid flow is permitted through said main bore (62) of said shut-off valve means (28) between said second port (82) and said function port (84) of said shut-off valve means (28);

c) said basing means (74), for example a spring, abuting said second end (68) of said main bore and said valve spool (64).

6. The control system of claim 5, wherein said valve spool (64) of said shut-off valve means (28) contains an internal passage way (76) which is open to said second end (68) of said main bore (62) and which connects this second end (68) to said reservoir port (86) remote from said second end when said valve spool (64) is in said second position.

7. The control system of claim 1, wherein said shut-off valve means (128) is located upstream of said control valve means (126) for controlling fluid flow between said source of pressurized fluid (120) and said control valve means.

8. The control system of claim 7, wherein said shut-off valve means (128) includes follower means (167) or the like contacting a portion (139) of the outer periphery of said control valve means (126) for responding to movement of said control valve means from its first to its second position to move said shut-off valve means (128) from its first towards its second position.

9. The control system of claim 8, characterized by the following features:

a) said control valve means (126) including a first port (151), a function port (157) and a reservoir port (159) all communicating with a main bore (134) which retains a valving element (138) movable between first and second control positions, whereby in said first port (151) is connected to said function port (157) and in said second position said first port (151) is connected to said reservoir port (159);

b) first servo means (166, 167) for assisting said follower means (167) is responsive to fluid pressure urging said shut-off valve means (128) towards its second position.

10. The control system of claim 9, wherein said shut-off valve means (128) comprises:

a) a valve body (136) having a main bore (162) with a first end (166) and a second end (168), a first port (180), a function port (184), first and second reservoir ports (186, 188) and a concentric bore (163) connecting said first end (166) of said main bore to said main bore (134) of said control valve means (126), said first reservoir port (186) of said shut-off valve means (128) connecting said concentric bore (163) to said reservoir (118) and said second reservoir port (188) connecting said second end (168) of said main bore to said reservoir (118), whereas said first port (180) is connected to said source (120) and said function port (184) of said shut-off valve means (128) is connected to said function port (157) of said control valve means (126);

b) a valve spool (164) mounted in said main bore (162) movable between first and second positions, wherein in said first position fluid flow is blocked between said first port (180) and said function port (184), whereas in said second position fluid flow is permitted between said first port (180) and said function port (184);

c) said biasing means (174), for example a spring, abutting said second end (168) of said main bore and said valve spool (164).

**Revendications**

1. Commande pour embrayage hydraulique (12; 112), constituée par une source de liquide sous pression (20; 120), un réservoir à liquide (18; 118) et des valves de commande (26, 28; 126, 128) montées dans le circuit d'écoulement du fluide, caractérisée par les particularités suivantes:

a) une valve de commande (26; 126) pour la commande de l'écoulement entre la source de liquide sous pression (20; 120) et l'embrayage (12; 112) est déplaçable entre une première position de commande dans laquelle elle relie la source de liquide sous pression à l'embrayage et une seconde position de commande dans laquelle elle relie le réservoir (18; 118) à l'embrayage;

b) un organe d'actionnement manuel (30, 32;

130, 132) pour déplacer la valve de commande (26; 126);

c) une valve d'arrêt (28; 128) pour la commande de l'écoulement entre la source de liquide sous pression (20; 120) et l'embrayage (12; 112) est repoussée par un organe élastique (74; 174) dans une première position dans laquelle elle interrompt l'écoulement entre la source liquide sous pression et l'embrayage, et elle est amenée, par suite du déplacement de la valve de commande (26; 126) dequis sa première position de commande dans sa seconde position de commande, en antagonisme à l'action de l'organe élastique, dans une seconde position dans laquelle elle permet l'écoulement entre la source de liquide sous pression et l'embrayage, et elle demeure dans sa seconde position, par suite du retour de la valve de commande à sa première position, tant que le fluide est soumis à l'effet d'une pression.

2. Commande suivant la revendication 1, caractérisée en ce que la valve d'arrêt (28) est, quand on considère la direction d'écoulement, montée en aval de la valve de commande (26), et commande donc l'écoulement entre la valve de commande et l'embrayage (12).

3. Commande suivant les revendications 1 et 2, caractérisée par les particularités suivantes:

a) un premier dispositif de servo-commande (62, 66) repousse, sous l'influence de la pression du liquide provenant de la source de liquide sous pression (20), la valve d'arrêt (28) en direction de sa seconde position;

b) un second dispositif de servo-commande (62, 68) repousse, sous l'influence de la pression du liquide acheminé à travers la valve de commande (26), la valve d'arrêt (28) en direction de sa première position et la maintient dans cette position.

4. Commande suivant la revendication 3, caractérisée par les particularités suivantes:

a) la valve de commande (26) comporte une admission (50), un orifice relié au dispositif commandé (54) et un orifice relié au réservoir (56), qui tous sont en communication avec l'alésage principal (34) dans lequel est monté un élément formant tiroir (38) déplaçable entre les deux positions de commande, l'admission (50) étant reliée à l'orifice (54) relié lui-même au dispositif commandé dans la première position de commande, et cet orifice (54) communiquant avec l'orifice (56) relié au réservoir dans la seconde position de commande;

b) des conduits d'écoulement (24, 58, 60) relient la source de liquide sous pression (20) à l'admission (50), le réservoir (18) à l'orifice relié au réservoir (56), et l'orifice relié au dispositif commandé (54) à l'embrayage (12);

c) la valve d'arrêt (28) est montée dans le conduit (60) entre l'orifice relié au dispositif commandé (54) et l'ambrayage (12);

d) un conduit (24, 80) relie la source de liquide sous pression (20) au premier dispositif de servo-commande (62, 66);

e) un conduit (76, 86) relie le second dispositif de servo-commande (62, 68) au réservoir (18) quand la valve d'arrêt (28) se trouve dans sa seconde position.

5. Commande suivant la revendication 4, caractérisée par les particularités suivantes de la valve d'arêt (28):

a) un boisseau ou corps (36) présente un alésage principal (62) muni d'une première extrémité (66) et d'une seconde extrémité (68), ainsi que d'un premier orifice (80), d'un second orifice (82), d'un orifice relié au dispositif commandé (84) et d'un orifice relié au réservoir (86), qui communiquent tous avec l'alésage principal (62), le premier orifice (80) étant relié à la source de liquide sous pression (20), le second orifice (82) étant relié par le conduit (60) à l'orifice relié au dispositif commandé (54) de la valve de commande (26), l'orifice relié au réservoir (86) étant relié au réservoir (18), et l'orifice relié au dispositif commandé (84) étant relié à l'embrayage (12) par le conduit (58);

b) un tiroir (64) est monté de façon coulissante dans l'alésage principal (62) et, dans sa première position, se premier orifice (80) de la valve d'arrêt (28) est relié par la valve de commande (26) à la seconde extrémité (68) de l'alésage principal (62) entre le second orifice (82) et l'orifice relié au dispositif commandé (84) de la valve d'arrêt (28) est interrompu, tandis que dans la seconde position du tiroir (64), la valve de commande (26) isole le premier orifice (80) de la valve d'arrêt (28) de la seconde extrémité (68) de l'alésage, une communication étant toutefois établie entre le second orifice (82) et l'orifice relié au dispositif commandé (84) de la valve d'arrêt par l'intermédiaire de l'alésage principal (62) de la valve d'arrêt (28);

c) l'organe élastique (74), qui est par exemple un ressort, prend appui entre la seconde extrémité (68) de l'alésage et le tiroir (64).

6. Commande suivant la revendication 5, caractérisée en ce qu'il est prévu, dans le tiroir (64) de la valve d'arrêt (28), un conduit ou passage (76) qui débouche dans la seconde extrémité (68) de l'alésage principal (62) et qui fait communiquer celle-ci, dans la seconde position du tiroir (64), avec l'orifice éloigné relié au réservoir (86) de la valve d'arrêt (28).

7. Commande suivant la revendication 1, caractérisée en ce que la valve d'arrêt (128) est, quand on considère la direction d'écoulement, montée en amont de la valve de commande (126), et commande en conséquence l'écoulement entre la source de liquide sous pression (120) et la valve de commande.

8. Commande suivant la revendication 7, caractérisée en ce que la valve d'arrêt (128) comprend un poussoir (167) ou analogue, qui s'applique sur un tronçon (139) de la surface extérieure de la valve de commande (126) de telle sorte que le déplacement de cette valve de la première à la seconde position de commande provoque un déplacement de la valve d'arrêt (128) à partir de sa première position, en direction de sa seconde position.

9. Commande suivant la revendication 8, caractérisée par les particularités suivantes:

a) la valve de commande (126) comporte un premier orifice (151), un orifice relié au dispositif commandé (157) et un orifice relié au réservoir (159), qui tous communiquent avec un alésage principal (134) dans lequel est monté un tiroir (138) déplaçable entre les deux positions de commande, le premier orifice (151) étant relié, dans la première position, à l'orifice relié au dispositif commandé (157) tandis que le premier orifice (151) est, dans la seconde position de commande, relié à l'orifice relié au réservoir (159);

b) un premier dispositif de servo-commande (166, 167) supporte l'action du poussoir (167) et repousse la valve d'arrêt (128) dans sa seconde position sous l'effet de la pression du liquide.

10. Commande suivant la revendication 9, caractérisée par les particularités suivantes de la valve d'arrêt (128);

a) un boisseau ou corps de valve (136) présente un alésage principal (162) muni d'une première extrémité (166), d'une seconde extrémité (168), ainsi que d'un premier orifice (180) , d'un orifice relié au dispositif commandé (184), d'un premier et d'un second orifices reliés au réservoir (186, 188), et d'un alésage concetrique (163), ce dernier faisant communiquer la première extrémité d'alésage (166) avec l'alésage principal (134) de la valve de commande (126), le premier orifice relié au réservoir (186) de la valve d'arrêt (128) faisant communiquer l'alésage concentrique (163) avec le réservoir (118), et le second orifice relié au réservoir (188) faisant communiquer la seconde extrémité d'alésage (168) avec le réservoir (118), tandis que le premier orifice (180) est relié à la source de liquide sous pression (120) et que l'orifice relié au dispositif commandé (184) de la valve d'arrêt (128) communique avec l'orifice relié au dispositif commandé (157) de la valve de commande (126);

b) un tiroir (164) est monté de façon coulissante dans l'alésage principal (162) et, dans sa première position, l'écoulement entre le premier orifice (180) et l'orifice relié au dispositif commandé (184) est interrompu, tandis que dans sa seconde position une communication pour le liquide existe entre le premier orifice (180) et l'orifice relié au dispositif commandé (184);

c) l'organe élastique (174), par exemple un ressort, prend appui entre la seconde extrémité (168) de l'alésage et le tiroir (164).

FIG. 1

FIG. 2

FIG. 3

FIG. 4

FIG. 5

0 059 968

FIG. 6